# EUROPEAN PATENT APPLICATION

(11) **EP 1 559 742 A1**
(43) Date of publication of application: **03.08.2005**
(21) Application number: 04447009.4
(22) Date of filing: 15.01.2004
(51) Int. Cl.: C08J 7/04, C09J 7/02

(54) **Transparent plastic labels**

(71) Applicant: Illochroma, 1180 Brussels (BE)
(72) Inventor: Defrenne, Daniel, 1430 Rebecq (BE)
(74) Representative: Leherte, Georges Maurice Lucien Marie

(57) **Abstract**

The invention relates to plastic label technology, suitable for cut and stack labels for application on normal wet glue labelling equipment, involving a transparent or translucent plastic sheet material as label base, provided with a coating comprising a nitrocellulose-acrylic base coating material, mineral pigments, and (an) antistatic agent(s).

The invention relates to the plastic labels themselves, to the method for producing the labels, and to the use of the labels on glass beverage containers applying normal wet glue labelling technology.

## Description

The invention relates to a process for the production of so called cut-and-stack labels for containers, in particular for glass beverage containers in general. The invention more particularly relates to the production of such labels, printed on transparent or translucent plastic sheet material and suitable for application on normal wet glue labelling equipment.

According to the current state of the art drinks- and beverage bottlers have a number of possibilities for labelling their containers :
Traditionally bottles have been labelled with paper labels using wet glue;
This is done on high speed lines, and requires the label to be absorbent to allow the glue to set. This technique is widespread and common among breweries and other bottlers. The main advantage is that, once the initial investment is made, labelling is both quick and cheap.
Alternatively a number of bottlers have switched to pressure-sensitive adhesive (PSA) labels (i.e. self-adhesive labels), allowing the use of plastic as base material for labels. This makes it possible to achieve a see-through look where a transparent plastic is used. However, self-adhesive labelling is much slower and expensive than wet-glue. Furthermore it requires additional investment, as the wet-glue labelling equipment can not be used.

For years bottlers have been searching for a method of applying plastic labels using the wet glue technique. This has been hindered by the fact that the plastic base material absorbs neither air nor water, resulting in bubbles forming under the label.

A number of halfway solutions are already on the market (such as special UV curing glues etc...). These have known only very limited success due to additional costs or difficulties in applying the labels.

A very thorough review of the state of the art relating to labelling of bottles and containers, and the various developments referred to here above, is reported in US patent 6.517.664, the content of which is hereby incorporated by reference in the present disclosure.

More recently attempt have been made to develop plastic labels for labelling applications using conventional wet applied water based labelling equipment.
A typical example of such attempts is claimed in US patent 6.517.664, where plastic labels are proposed using special low density polymeric material with a hydrophilic polyacrylate coating, to allow migration of water into the labels.

It is the object of the present invention to provide a further improved plastic label technology suitable for cut and stack labels for application on normal wet glue labelling equipment, which do not require such special low density polymeric material and which can be applied for transparent or translucent plastic labels.

The essential feature of the new label technology according to the invention resides in the fact that the label base is a plastic sheet material provided with a coating comprising
a coating base material is a nitrocellulose-acrylic base coating,
mineral pigments, and
(an) antistatic agent(s).

According to the invention the coating of the label sheet material preferably shows
a surface tension of at least 38 dynes / cm,
a dynamic friction coefficient in the range between 0.18 and 0.40, preferably between 0.18 and 0.25, and
a micro-absorption performance involving fast surface absorption, which most preferably stops upon penetration.

The new label technology according to the invention is perfectly suitable for application on standard wet labelling equipment, as it is well know to those skilled in the art. A summary review of such equipment is provided in the "Krones Manual of Labeling Technology" by Hermann Kronseder (dec. 1978) the content of which is hereby incorporated by reference in the present disclosure.

In a preferred embodiment of the invention the antistatic agent(s) of the coating most suitably comprise(s) a quaternary ammonium salt.

In another preferred embodiment of the invention, the label sheet material is adequately provided with from 1.5 to 6 g/m² dry weight of the coating, preferably from 1.5 to 6 g/m².

According to a further preferred feature of the invention, the plastic sheet material of the label base may be selected from "normal" density polymer sheet materials (as opposed to low density polymer sheet materials sometimes referred to as "cavitated", "micro voided" or foamed polymer material), comprising in particular oriented polyolefins (most preferably oriented and bis oriented polypropylene) polyester, cellulose, ....

According to still another preferred feature of the invention the label ideally constitutes a printed transparent or translucent plastic label.

The new label technology according to the invention specifically relates to
plastic labels as defined above, in particular transparent or translucent plastic label, suitable as cut and stack label for application on normal wet glue labelling equipment,
to methods for producing such plastic labels, in particular, transparent or translucent plastic labels, suitable as cut and stack labels for application on normal wet glue labelling equipment, and
to the use of such plastic labels on containers, in particular on glass beverage containers.

In the method for producing printed transparent or translucent plastic labels the plastic sheet material is provided with said coating comprising a nitrocellulose-acrylic base coating before, during, or after the printing stage.

Further details of the invention will be apparent from the description, here below, of a preferred variants for embodying the invention :
A. Printing process : Gravure, Offset or flexo printing.
   - printing in reels
   - printing on OPP film
   - surface or reverse printing on the film.
   - solvent, UV or waterbased inks
   - antistatic coating applied on the frontside or reverse,
   - micro absorbent coating according to the invention. This layer facilitates the absorption of the glue's water during the labelling process. It can be coloured to match the colour of the bottle.

   At the end of the printing process, printed reels are obtained.
B. Cutting
   - the reels are cut into sheets.
   - during the sheet cutting, embossing can be achieved in-line; embossing is useful for proper dispersion of the glue and for improved drying of the glue after labelling; embossing can be obtained with iron/cardboard or iron/iron cylinders.
   - the sheets are cut into strips and then into square cut size.
   - following the customer's request, they can also be cut using a die-cutting tool
   - It is also possible to achieve the embossing and the converting in-line with a kiss-cutting cylinder.
   - Cutting can for instance be carried out on standard sheet cutters type Strachan Henschaw or equivalent
C. Embossing / packaging
   - Use of specific embossing cylinders; embossing can suitably be carried out at the cutting stage
   - The labels are assembled into bundles (bundled with an elastic band, PE film or kraft paper).
   - The bundle contains from 1000 to 1250 labels.
   - They are put in cardboard boxes.

### Merits of the new technology :

a) Facility of label production
   The process according to the invention can be used on standard printing equipment, as far as it is suitable for plastic printing. This applies to all production process in reels, including rotogravure, rotary offset and flexo printing
b) Facility of label application
   The new label according to the invention applied to beverage containers (bottles) in a similar way as a normal paper label on wet-glue labelling equipment. As most beverage producers are already using such equipment, the invention avoids the necessity for the bottler to invest in new labelling machinery, while still maintaining the productivity advantage over pressure-sensitive labelling lines.
c) Cost advantage
   Due to the advantages cited above (a & b) the invention allows a solution equivalent to pressure-sensitive labels at a variable cost more than 30 % lower. Furthermore, as it is no longer required to invest in new labelling equipment, fixed cost savings can be obtained.
d) Easy industrial application of the invention are very low
   Only minimal adaptations are required to existing labelling machinery
   No investment in new labelling lines is necessary
   If all elements of the production process and of the labelling process are respected, operators can be instructed quickly building on their existing knowledge.

### Optimal labelling conditions :

a) Glue :
   1. Specific glue
   2. Temperature : 20 - 45° C
   3. Avoid air bubbles building up during the application
   4. Cleaning with water < 30° C
   5. Optimal quantity at 12 g/m² for uniform spreading
b) Label:
   1. Illoclear preparation (chemical and mechanical)
   2. Printing of a frame following the labelling conditions
   3. Embossing
c) Bottle :
   1. Dry
   2. Bottles with straight walls
   3. Bottle temperature from 10 to 28° C
   4. Surface tension <38 Dynes/cm
   5. With recess
d) Labelling machine :
   1. Good maintenance of machine
   2. Glue roller and blade in good shape
   3. Size of the glue pallet <+/- 0.5 mm
   4. Small grippers (to avoid unglued areas)
   5. Hard sponge (type Al foil)
   6. Brushes (type Al foil)
   7. Rubber smoothing pallets type hard, 1 game

The preferred features of the label production process
The preferred features of the labels are : a substrate, inks and varnishes.
a. Substrate : Film BOPP (bi oriented polypropylene, co-extruded) : from 50 to 80 microns.
clear i.e. transparent
potential suppliers :
- TREOPHAN
- UCB
- EXXON Mobil

b. Inks and varnishes :
potential suppliers are :
   - Sun Chemical
   - Sicpa

c. essential properties of the coating elements:

| Elements | Type | Weight |
|---|---|---|
| Nitrocellulose-acrylic | In 50/50 composition | 87-89% |
| Pigments | Mineral and organic (polyethylene) | 10-12% |
| Antistatic agent | Quaternary ammonium salt | < 1% |

The coating is applied to the reverse side (relative to the print side ) of the label.

Measuring the micro-absorbtion properties of the labels according to the invention :
the micro-absorption can be measured by either one of the following methods.
   a. by placing the label on a damp surface and measuring (by conductivity) the water penetration speed of the glue (backside to frontside).
      The specification is from 15 to 30 seconds.
   b. by evaluating the setting time on the bottling line.
      This evaluation is carried out at the end of the labelling by pressing the finger on the label. The latter must stay in place at the latest 10 seconds after being labelled.

While specific embodiments and applications of this invention have been shown and described, it should be clear to those skilled in the art that many more modifications and applications are possible without departing from the inventive concepts herein.
The invention is, therefore, not to be restricted in any way, except in the spirit of the appended claims.

## Claims

1. Transparent or translucent plastic label, suitable as cut and stack label for application on normal wet glue labelling equipment, **characterised in that** the label base is a plastic sheet material provided with a coating comprising
a nitrocellulose-acrylic base coating material,
mineral pigments, and
(an) antistatic agent(s).

2. Plastic label according to any one of claim 1 and 2, **characterised in that** the antistatic agent(s) comprise(s) a quaternary ammonium salt.

3. Plastic label according to any one of the preceding claims, **characterised in that** the label sheet material is provided with from 1.5 to 6 g/m² dry weight of said coating.

4. Plastic label according to any one of the preceding claims, **characterised in that** the label base is a plastic sheet material selected from oriented polyolefin, in particular oriented or bis polypropylene, polyester, cellulose, ....

5. Plastic label according to claim 1, **characterised in that** the label is a printed transparent or translucent plastic label.

6. Method for producing transparent or translucent plastic labels, suitable as cut and stack labels for application on normal wet glue labelling equipment, **characterised in that** a transparent or translucent plastic sheet material is used, provided with a coating comprising
a nitrocellulose-acrylic base coatings material,
mineral pigments, and
antistatic agents,

7. Method for producing printed transparent or translucent plastic labels, suitable as cut and stack labels for application on normal wet glue labelling equipment, **characterised in that** the labels are printed on a transparent or translucent plastic sheet material, and that said plastic sheet material is provided with a coating comprising
a nitrocellulose-acrylic base coating material
mineral pigments, and
antistatic agents,
before, during, or after the printing stage.

8. Method according to any one of claims 7 and 8, **characterised in that** a coating satisfying the features of any one of claims 2 and 3 is provided on a sheet material selected from oriented polyolefin, in particular oriented or bis polypropylene, polyester, cellulose, ....

9. Use of a label according to any one of claims 1 - 5 on a glass beverage container, applying normal wet glue labelling technology.
